# EUROPEAN PATENT SPECIFICATION

(11) **EP 1 659 547 B1**
(45) Date of publication and mention of the grant of the patent: **16.03.2011**
(21) Application number: 05021632.4
(22) Date of filing: 04.10.2005
(51) Int. Cl.: G07F 13/06, A47J 31/40

(54) **Dispensing assembly for machines for making infusions in general, particularly espresso coffee**
Ausgabeanordnung für Geräte zum Herstellen eines Brühgetränkes im allgemeinen und Espresso-kaffee insbesondere
Système de distribution pour machines pour la préparation d'infusions en général, de café expresso en particulier.

(30) Priority: 22.11.2004 IT MI20042256
(43) Date of publication of application: 24.05.2006
(73) Proprietor: Locati Trading S.r.l., 20123 Milano (IT)
(72) Inventor: Locati, Antonio, 21015 Lonate Pozzolo, VA (IT)
(74) Representative: Alagem Modiano, Lara S.

(56) References cited:
- WO-A-2005/058111
- US-A- 5 755 149

## Description

The present invention relates to a dispensing assembly for machines for making infusions in general, particularly espresso coffee.

As is known, various types of machines for making infusions and particularly espresso coffee are already commercially available which use, in order to contain the powder for producing the infusion, pods or tablets, which are placed in a filter holder, where the infusion with consequent dispensing of the beverage occurs.

In the solutions of the background art, the pod, tablet or the like is normally arranged on a horizontal plane within a filter holder, which acts as a containment element for performing the infusion.

This type of solution inevitably causes stagnation of water or of coffee powder, which besides being scarcely advisable from a hygienic standpoint can also affect negatively the taste of the beverage.

Another problem that can be ascribed to the solutions of the background art consists in that the dispensing assembly requires relatively complicated operations in order to replace the pod, tablet or the like, with consequent useless operating times.

Another problem further consists in that currently known applications are generally structurally very complicated and accordingly more easily subject to damage and maintenance.

U.S. Patent No. 5,755,149 discloses an automatic machine for the preparation of hot beverage infusions such as coffee comprising a fixed piston, a cylindrical body (movable relative to the fixed piston 1), a boiler and means for maintaining in position the package containing the product to be infused. The infusion chamber is formed by two half recesses, facing each other and being disposed on the body (first recess) and the boiler (second recess) respectively. Moreover, said infusion chamber is placed in the channel for introducing the package. After the package has been introduced in the means, forming said above mentioned channel, the lower reception means immobilize temporarily the package of the product to be infused until the movable cylindrical body, which is displaced horizontally relatively to the boiler, displaces the first half recess so as to face the second half recess.

The aim of the invention is to solve the problem described above by providing a dispensing assembly for machines for making infusions in general, particularly espresso coffee, which allows to eliminate completely stagnations of water or coffee that occur between one infusion and the next, thus achieving significant advantages from a hygienic standpoint and from an organoleptic standpoint.

Within this aim, an object of the invention is to provide a dispensing assembly which, though being mechanically simple, is particularly precise and sturdy, with consequent benefits in terms of durability and by virtue of the total lack of maintenance.

Another object of the present invention is to provide a dispensing assembly that thanks to its particular constructive characteristics is capable of giving the greatest assurances of reliability and safety in use.

Another object of the present invention is to provide a dispensing assembly that can be obtained easily starting from commonly commercially available elements and materials and is further competitive from a merely economical standpoint.

This aim and these and other objects, which will become better apparent hereinafter, are achieved by a dispensing assembly for machines for making infusions in general, particularly espresso coffee, according to the invention, as claimed in claim 1.

Further characteristics and advantages of the present invention will become better apparent from the description of a preferred but not exclusive embodiment of a dispensing assembly for machines for making infusions in general, particularly espresso coffee, illustrated by way of non-limiting example in the accompanying drawings, wherein:

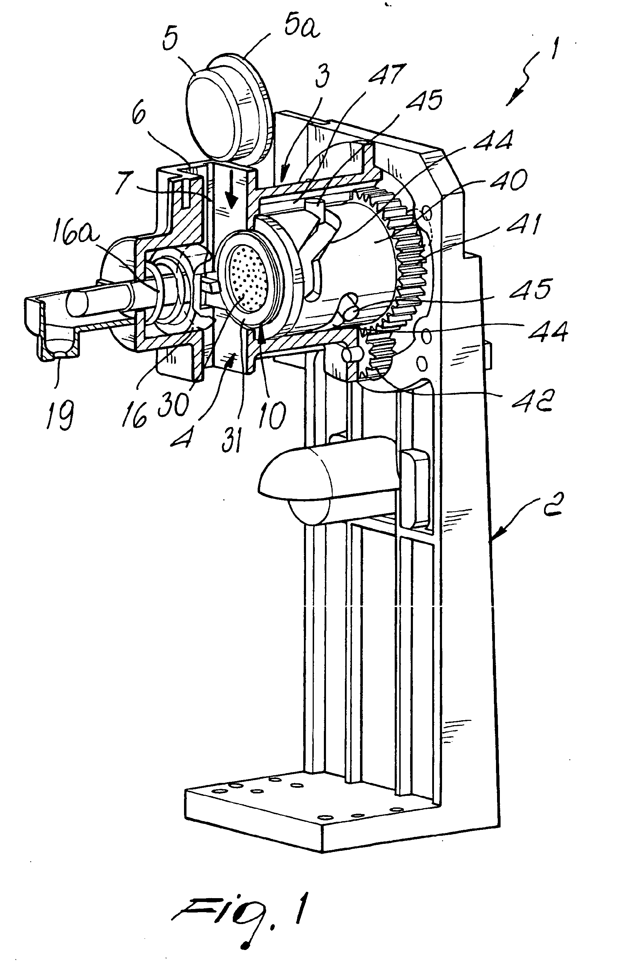

Figure 1 is a schematic perspective view of the dispensing assembly;

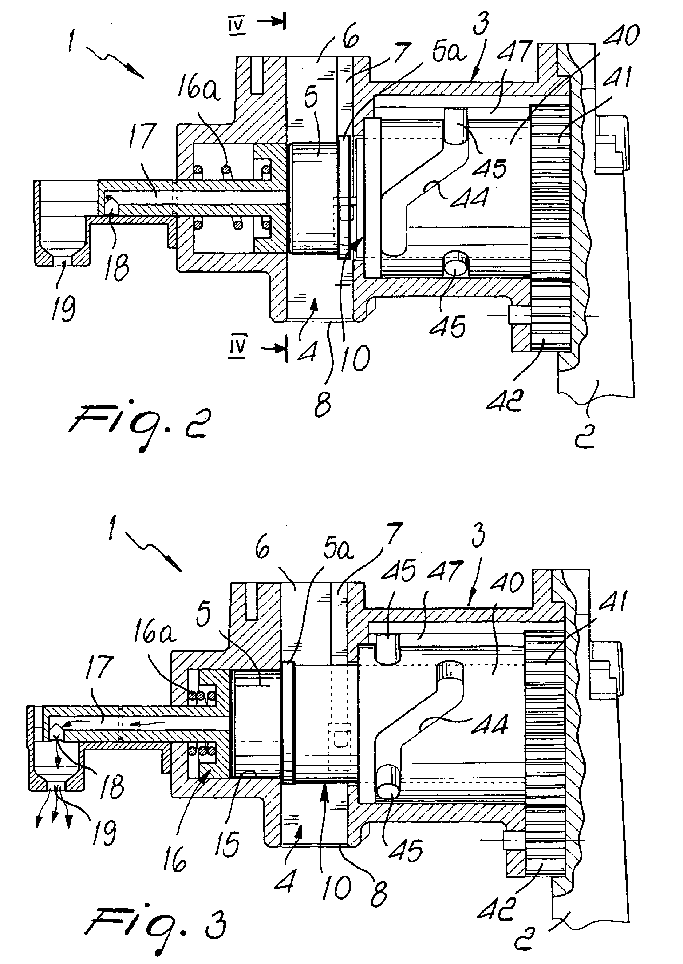

Figure 2 is a sectional view, taken along a vertical plane, of the infusion assembly during the insertion of a pod and the like;
Figure 3 is a sectional view of the infusion assembly during the making of the infusion;

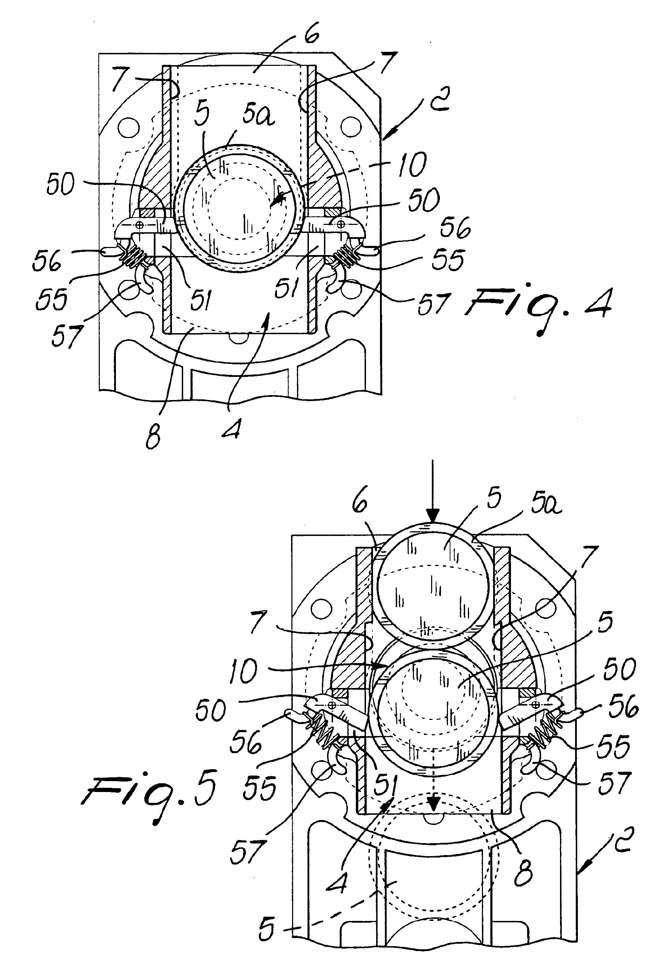

Figure 4 is a sectional view of the infusion assembly, taken along the line IV-IV of Figure 2;
Figure 5 is a schematic view of the step for the insertion of a pod with expulsion of the previously used pod;

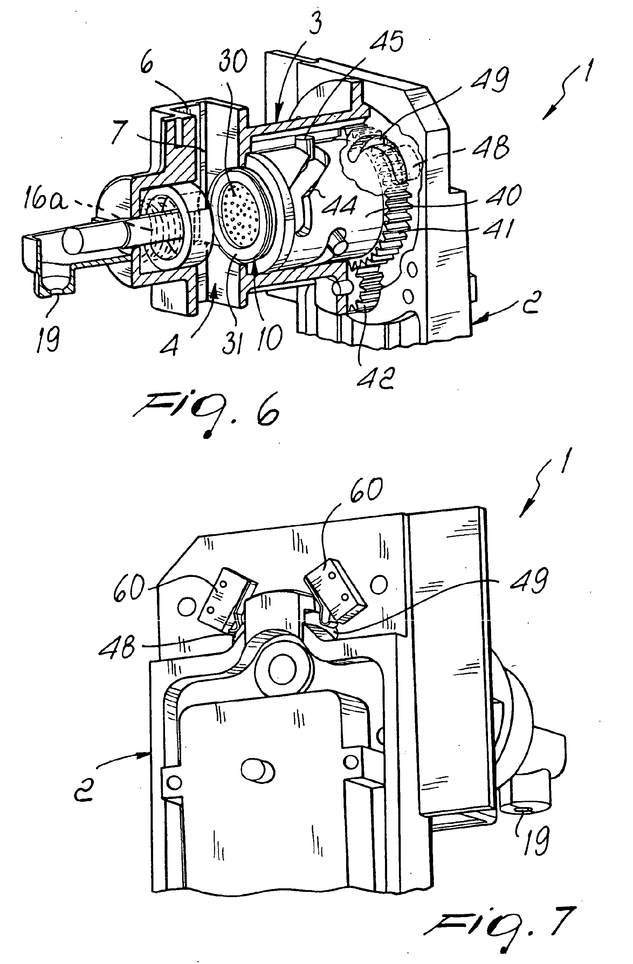

Figure 6 is a schematic perspective cutout view of the infusion chamber, illustrating the translational motion means for the transfer of the pod;
Figure 7 is a rear view of the dispensing assembly, illustrating the microswitches for activating the translational motion means.

With reference to the figures, the dispensing assembly for machines for making infusions in general, and particularly espresso coffee, generally designated by the reference numeral 1, comprises a supporting frame 2, which is preferably made of plastic material by injection molding and supports a dispensing body, generally designated by the reference numeral 3, which forms an input channel 4 for inserting a pod, tablet or the like 5, which contains the powder for making the infusion.

The input channel 4 has a substantially vertical axis, has, in an upward region, an inlet 6 with a guiding slot 7 for correctly positioning the pod 5, typically provided with a flange 5a, and is further provided with an outlet 8.

An infusion assembly, generally designated by the reference numeral 10, leads into the input channel 4 and is connected to translational motion means in order to transfer the pod 5 into an infusion chamber 15, which is delimited by a piston 16 connected to a dispensing duct 17, which leads into a spout 18, which can be positioned, when the beverage is dispensed, at a dispensing outlet 19.

The infusion assembly 10 is provided at the front with a finely perforated surface 30, surrounded by a sealing gasket 31 which acts on the flange 5a of the pod 5, and is connected to means for dispensing hot water; the infusion assembly can move axially by way of the translational motion means, which are constituted by an external bushing 40 provided with a set of teeth 41 which interacts with a pinion 42 actuated by an actuation motor (not illustrated in the figures).

The bushing 40 forms, on the surface, cam-like paths 44 engaged by pins 45 which protrude radially from the body of the infusion device and slide within guiding seats 47 formed by the dispensing body so as to prevent rotation of the infusion body about its own axis.

With the described arrangement, therefore, the rotation of the bushing 40 produces an axial translational motion of the infusion body, which transfers the tablet 5 into the infusion chamber.

The tablet 5, which is introduced through the upper inlet 6 of the channel 4, is arranged correctly in front of the infusion assembly thanks to the presence of positioning means, which are constituted by retention arms 50, which by passing through slots 51 of the channel 4 arrange themselves in said channel so as to engage the flange 5 a of the tablet 5 in order to retain it in position.

The arms 50 can oscillate in contrast with, and by virtue of the action of, elastic means constituted by helical springs 55, which act between the outer end 56 of the arms 50 and a fixed abutment 57 formed on the dispensing body.

The springs 55 are set so as to retain in position the pod 5 when it is introduced in the channel 4, but can yield elastically when another pod is pushed into the channel 4 and, by acting on the previously used pod or tablet, moves it away, expelling it downwardly thanks to the fact that the arms 50 can rotate, tensioning the springs 55 and allowing the expulsion of the already-used pod.

As soon as the already-used pod is expelled, the springs 55 return the arms 50 into position in order to retain the new introduced pod.

Once the pod is in position, the translational motion means are actuated and in particular the motor that turns the bushing 40 is actuated.

For this purpose, the bushing 40 is provided at the rear with an abutment protrusion 48, which protrudes on the rear face of the frame 2 through a circumferential slot 49 in order to interact with stroke-limiting microswitches 60, which control the actuation of the motor 43 in the two directions.

Substantially, therefore, after introducing the new pod in order to make the infusion, the translational motion means are actuated and move the new pod into the infusion chamber 15, by virtue of the rotation of the bushing 40, which imparts the axial translational motion of the infusion body and pushes the pod 5, which in turn pushes the piston 16 in contrast with the return spring 16a, which is compressed so as to apply a retention thrust between the infusion body and the pod.

Once the beverage has been dispensed, the bushing 40 is turned in the opposite direction in order to return the infusion assembly to an ideal position and at the same time the piston 16 expels from the infusion chamber 15 the used pod 5, putting it back into the input channel 4, which by being arranged vertically does not allow stagnation of water or other material, which is expelled downwardly, where a collection container is located.

From what has been described above, it is therefore evident that the invention achieves the proposed aim and objects and in particular attention is called to the extreme constructive simplicity of the assembly and to the very easy insertion of the pods and the like, which automatically expel the previously used pod.

Moreover, the possibility to manufacture all the components of the machine by injection molding allows to have a low production cost and complete recyclability of the materials.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2004A002256 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A dispensing assembly (1) for machines for making infusions in general, particularly espresso coffee, comprising a supporting frame (2) and supporting a dispensing body (3) which forms an input channel (4) for introducing a pod, tablet and the like (5) containing a powder for making an infusion, an infusion assembly (10) leading into said input channel (4), being able to engage said pod (5),
**characterized in that** said infusion assembly (10) is connected to translational motion means (40,41,42) for the transfer of said pod (5) into an infusion chamber (15), which is connected to at least one dispensing spout (18), said translational motion means (40,41,42) comprising an external bushing (40), which is provided on its surface with cam-like paths (44) in which pins (45) engage which protrude radially from said infusion assembly (10) and can be accommodated slidingly within guiding seats (47) formed by the dispensing body in order to prevent the rotation of said infusion body about its own axis.

2. The dispensing assembly (1) according to claim 1, **characterized in that** said input channel (4) has a substantially vertical axis.

3. The dispensing assembly (1) according to the preceding claims, **characterized in that** said input channel (4) is provided, in an upward region, with an inlet with a guiding slot (49) for correctly positioning said pod, tablet and the like (5), which is provided with a flange (5a) at one end face, said input channel (4) being provided with an outlet (8) in a downward region.

4. The dispensing assembly (1) according to one or more of the preceding claims, **characterized in that** it comprises, in said infusion chamber (15), a piston (16) which is connected to a dispensing duct (17), which leads into said dispensing spout (18), a return spring (16a) acting on said piston (16) and being adapted to apply a retention thrust to said pod, tablet and the like (5) and to expel said pod (5) after the infusion has been made.

5. The dispensing assembly (1) according to one or more of the preceding claims, **characterized in that** said infusion assembly (10) forms at the front a finely perforated surface (30), which is surrounded by a sealing gasket (31) which acts on a said flange (5a) of said pod and the like (5), said infusion assembly (10) being connected to water dispensing means.

6. The dispensing assembly (1) according to claim 5, **characterized in that** it comprises, on said external bushing (40), a set of teeth (41), which interacts with a pinion (42) actuated by an actuation motor.

7. The dispensing assembly (1) according to one or more of the preceding claims, **characterized in that** it comprises means for positioning said pod, tablet and the like (5), which are constituted by retention arms (50), which protrude into said input channel (4) and can engage the flange (5a) of said tablet (5) and the like, said arms (50) being able to oscillate in contrast with, and by virtue of the action of, elastic means.

8. The dispensing assembly (1) according to claim 7, **characterized in that** said elastic means are constituted by helical springs (55), which act between the external end (56) of said arms (50) and a fixed abutment (57) formed on said dispensing body.

9. The dispensing assembly (1) according to claim 8, **characterized in that** said helical springs (55) have a setting which is adapted to retain in position the tablet (5) introduced in the channel (4) and to yield elastically to the thrust applied by an additional pod (5) introduced in said input channel (4) in order to expel the used pod (5) and replace it with said additional pod (5).

10. The dispensing assembly (1) according to one or more of claims 5 to 9, **characterized in that** it comprises, at an axial end of said external bushing (40), an abutment protrusion, which protrudes onto the rear face of the supporting frame of said infusion assembly (10), stroke-limiting microswitches being further provided which interact with said abutment protrusion in order to drive said actuation motor in two mutually opposite directions.

## Patentansprüche

1. Ausgabeanordnung (1) für Maschinen, die allgemein Aufgüsse und insbesondere Espresso-Kaffee machen, die einen Stützrahmen (2) umfasst und einen Ausgabekörper (3) stützt, der einen EinfiJhrkanai (4) zum Einführen eines Halters, einer Tablette oder ähnlichem (5), der ein Pulver zum Herstellen des Aufgusses enthält, und die eine Aufgussanordnung (10) umfasst, die zu dem Einführkanal (4) führt und in der Lage ist, mit dem Halter (5) in Eingriff zu gelangen, **dadurch gekennzeichnet, dass** die Aufgussanordnung (10) mit Mitteln (40, 41, 42) für eine translatorische Bewegung verbunden ist, um den Halter (5) in eine Aufgusskammer (15) zu überführen, die mit wenigstens einer Ausgabemündung (18) verbunden ist, wobei die Mittel (40, 41, 42) für eine translatorische Bewegung eine externe Hülse (40) umfassen, die an ihrer Außenseite mit nockenartigen Pfaden (44) versehen ist, in die Stifte (45) eingreifen, die radial aus der Aufgussanordnung (10) hervorstehen und die gleitend in Führungsaufnahmen (47) aufgenommen werden könnten, die durch den Ausgabekörper geformt werden, um eine Rotation des Aufgusskörpers um seine eigene Achse zu verhindern.

2. Ausgabeanordnung (1) nach Anspruch 1, **dadurch gekennzeichnet, dass** der Einführkanal (4) eine im Wesentlichen vertikale Achse aufweist.

3. Ausgabeanordnung (1) nach einem der vorstehenden Ansprüche, **dadurch gekennzeichnet, dass** der Einführkanal (4) in einer oberen Region mit einem Eingang mit einem Führungsschlitz (49) versehen ist, um den Halter, die Tablette oder ähnliches (5), der mit einem Kragen (5a) an einer Stirnfläche versehen ist, korrekt zu positionieren, wobei der Einführkanal (4) mit einem Auslass (8) in einer unteren Region versehen ist.

4. Ausgabeanordnung (1) gemäß einem oder mehreren der vorstehenden Ansprüche, **dadurch gekennzeichnet, dass** es in der Aufgusskammer (15) einen Kolben (16), der mit einerAusgabeleitung (17) verbunden ist, die in die Ausgabemündung führt, und eine Rückholfeder (16a) umfasst, die auf den Kolben (16) wirkt und ausgebildet ist, auf den Halter, die Tablette oder ähnliches (5) eine Rückholspannung auszuüben und den Halter, (5) nachdem der Aufguss gemacht wurde, auszustoßen,

5. Ausgabeanordnung (1) nach einem oder mehreren der vorstehenden Ansprüche, **dadurch gekennzeichnet, dass** die Aufgussanordnung (10) an der Vorderseite eine feinperforierte Oberfläche (30) bildet, die von einer Dichtung (31) umgeben ist, die auf den Kragen (5a) des Halters oder ähnlinahem(5) wirkt, wobei die Aufgussanordnung (10) mit Wasserausgabemitteln verbunden ist.

6. Ausgabeanordnung (1) nach Anspruch 5, **dadurch gekennzeichnet, dass** sie an der externen Hülse (40) einen Satz Zähne (41) umfasst, der mit einem Antriebszahnrad (42) zusammenwirkt, das von einem Antriebsmotor angetrieben wird.

7. Ausgabeanordnung (1) nach einem oder mehreren der vorstehenden Ansprüche, **dadurch gekennzeichnet, dass** sie Mittel zum Positionieren des Halters, der Tablette oder ähnlichem (5) umfasst, die durch Rückhalterme (50) gebildet werden, die in den Einführkanal (4) hineinragen und mit dem Kragen (5a) des Halters (5) oder ähnlichem in Eingriff gelangen können, wobei die Arme (50) gegen und mittels der Wirkung von elastischen Mitteln schwingen können.

8. Ausgabeanordnung (1) nach Anspruch 7, **dadurch gekennzeichnet, dass** die elastischen Mittel durch Schraubenfedern (55) gebildet sind, die zwischen dem externen Ende (56) der Arme (50) und einem festen Widerlager (57) wirken, das an dem Aufgusskörper gebildet ist.

9. Ausgabeanordnung (1) nach Anspruch 8, **dadurch gekennzeichnet, dass** die Schraubenfedern (55) eine Abstimmung haben, die angepasst ist, die Tablette (5), die in den Kanal (4) eingeführt ist, in Position zu halten und aufgrund des Drucks, der durch einen weiteren Halter (5) aufgebracht wird, der in den Einführkanal (4) eingeführt wird, elastisch zu schwingen, um den gebrauchten Halter (5) auszuwerfen und ihn durch den zusätzlichen Halter (5) zu ersetzen.

10. Ausgabeanordnung (1) nach einem oder mehreren der Ansprüche 5 bis 9, **dadurch gekennzeichnet, dass** sie an einem axialen Ende der externen Hülse (40) einen Widerlagervorsprung umfasst, der bis auf die Rückseite des Stützrahmens der Aufgussanordnung (10) hervorsteht, wobei zusätzlich hubbegrenzende Mikroschalter bereitgestellt werden, die mit dem Widerlagervorsprung zusammenwirken, um den Antriebsmotor in zwei zueinander entgegengesetzten Richtungen zu betreiben.

## Revendications

1. Système de distribution (1) pour machines pour la préparation d'infusions en général, en particulier du café expresso, comprenait un bâti de support (2) et supportant un corps de distribution (3) qui forme un conduit d'entrée (4) ser-vant à introduire une dosette, une capsule ou autre (5) contenant une poudre pour préparer une infusion, un dispositif d'infusion (10) aboutissant dans le conduit d'entrée (4), étant conçu pour venir contre ladite dosette (5),
**caractérisé en ce que** ledit dispositif d'infusion (10) est relié à des moyens de déplacement en translation (40, 41, 42) en vue de l'introduction de ladite dosette (5) dans une chambre d'infusion (15), qui est reliée à au moines un bec verseur (18), lesdits moyens de déplacement en translation (40, 41, 42) comportant un manchon extérieur (40) muni, sur sa surface de pistes (44) analogues à des cames, dans lesquelles s'engagent des doigts (45) qui font radialement saillie depuis ledit dispositif d'infusion (10) et peuvent être reçus par coulissement dans des logements de guidage (47) formées par le corps de distribution afin d'empêcher la rotation dudit dispositif d'infusion autour de son propre axe.

2. Système de distribution (1) selon la revendication 1, **caractérisé en ce que** ledit conduit d'entrée (4) a un axe sensiblement vertical.

3. Système de distribution (1) selon les revendications précédentes, **caractérisé en ce que** ledit conduit d'entrée (4) comporte, dans le haut, une entrée avec une gorge de guidage (49) pour mettre correctement en place ladite dosette; capsule ou autre (5), qui est munie d'une collerette (5a). sur une face d'extrémité, ledit conduit d'entrée (4) comportant une sortie (8) dans le bas.

4. Système de distribution (1) selon une ou plusieurs des revendications précédentes, **caractérisé en ce qu'**il comprend, dans ladite chambre d'infusion (15), un piston (16) relié à un conduit de distribution (17), lequel débouche dans ledit bec verseur (18), un ressort de rappel (16a) agissant sur ledit piston (16) et étant conçu pour exercer une poussée de retenue sur ladite dosette, capsule ou autre (5) et pour expulser ladite dosette (5) après que l'infusion a été préparée.

5. Système de distribution (1) selon une ou plusieurs des revendication précédentes, **caractérisé en ce que** ledit dispositif d'infusion (10) forme à l'avant une surface (30) à fines perforations, qui est entourée par un joint d'étanchéité (31) agissant sur une dite collerette (5a) de ladite dosette ou autre (5), ledit dispositif d'infusion (10) étant relié à un moyen de distribution d'eau.

6. Système de distribution (1) selon la revendication 5, **caractérisé en ce qu'**il comprend, sur ledit manchon extérieur (40), un ensemble de dents (41) qui coopère avec un pignon (42) actionné par un moteur d'actionnement.

7. Système de distribution (1) selon une ou plusieurs des revendications précédentes, **caractérisé en ce qu'**il comprend des moyens pour mettre en place ladite dosette, capsule ou autre (5), lesquels sont constitués par des bras de retenue (50), qui font saillie jusque dans ledit conduit d'entrée (5) et peuvent venir contre la collerette (5a) de ladite capsule (5) ou autre, lesdits bras (50) pouvant osciller en s'opposant à des moyens élastiques et du fait de l'action de ces derniers.

8. Système de distribution (1) selon la revendication 7, **caractérisé en ce que** lesdits moyens élastiques sont constitués par des ressorts hêlicoïdaux (55) qui agissent entre l'extrémité extérieure (56) desdits bras (50) et une butée fixe (57) formée sur ledit dispositif de distribution.

9. Système de distribution (1) selon la revendication 8, **caractérisé en ce que** lesdits ressorts hélicoïdaux (55) ont un réglage conçu pour maintenir en place la capsule (5) introduite dans le conduit (4) et pour céder élastiquement à la poussée exercée par une dosette supplémentaire (5) introduite dans ledit conduit d'entrée (4) afin d'expulser la dosette usée (5) et de la remplacer par ladite dosette supplémentaire (5).

10. Système de distribution (1) selon une ou plusieurs des revendications 5 à 9, **caractérisé en ce qu'**il comprend, à une extrémité axiale dudit manchon extérieur (40), une saillie de butée, qui fait saillie jusque sur la face arrière du bâti de support dudit dispositif d'infusion (10), des microcontacts de limitation de course étant en outre prévus pour coopérer avec ladite saillie de butée afin d'entraîner ledit moteur d'actionnement dans deux directions mutuellement opposées.
